# EUROPÄISCHE PATENTSCHRIFT

(11) **EP 3 400 639 B1**
(45) Veröffentlichungstag und Bekanntmachung des Hinweises auf die Patenterteilung: **19.06.2019**
(21) Anmeldenummer: 17700330.8
(22) Anmeldetag: 12.01.2017
(51) Int. Cl.: H02H 7/125, H02H 7/06, H02M 1/32, H02M 7/219, B60L 11/18, B60L 15/00

(54) **VERFAHREN ZUM BETREIBEN EINES AKTIVEN BRÜCKENGLEICHRICHTERS IN EINEM KRAFTFAHRZEUG UND MITTEL ZU DESSEN DURCHFÜHRUNG**
METHOD FOR OPERATING AN ACTIVE BRIDGE RECTIFIER IN A MOTOR VEHICLE AND METHOD FOR PERFORMING SAID METHOD
PROCÉDÉ DE FONCTIONNEMENT D'UN PONT REDRESSEUR ACTIF DANS UN VÉHICULE AUTOMOBILE ET MOYEN POUR LE METTRE EN OEUVRE

(30) Priorität: 15.03.2016 DE 102016204224
(43) Veröffentlichungstag der Anmeldung: 14.11.2018
(73) Patentinhaber: SEG Automotive Germany GmbH, 70499 Stuttgart (DE)
(72) Erfinder: OTTE, Christopher, 72762 Reutlingen (DE); MEHRINGER, Paul, 70569 Stuttgart (DE)
(74) Vertreter: Steinbauer, Florian
(86) Internationale Anmeldenummer: PCT/EP2017/050511
(87) Internationale Veröffentlichungsnummer: WO 2017/157539

(56) Entgegenhaltungen:
- EP-A1- 2 747 231
- US-A1- 2014 055 894

## Beschreibung

Die vorliegende Erfindung betrifft ein Verfahren zum Betreiben eines aktiven Brückengleichrichters gemäß dem Oberbegriff des Patentanspruchs 1 sowie Mittel zu dessen Durchführung.

### Stand der Technik

Zur Speisung von Gleichstromsystemen aus Drehstromsystemen (z.B. aus dem öffentlichen Drehstromnetz) werden typischerweise Gleichrichter verwendet, die in Brückenschaltung aufgebaut sind. Als Gleichrichterelemente dienen herkömmlicherweise Dioden. Entsprechende Gleichrichter werden auch als passive (Brücken-)Gleichrichter bezeichnet. Die Dioden eines passiven Brückengleichrichters benötigen keine Ansteuerschaltung, da sie selbstständig zum richtigen Zeitpunkt in den leitenden oder sperrenden Zustand übergehen.

In Kraftfahrzeugen wird typischerweise mittels einer elektrischen Maschine Drehstrom erzeugt. Beispielsweise können in diesem Zusammenhang Klauenpolgeneratoren zum Einsatz kommen. Vereinfacht wird eine entsprechende elektrische Maschine nachfolgend auch als Generator bezeichnet, obwohl auch ein motorischer Betrieb vorgesehen kann, beispielsweise bei einem sogenannten Startergenerator. Die Erfindung eignet sich beispielsweise für Generatoren in Klauenpolbauweise, aber auch für elektrische Maschinen anderer Bauart.

Herkömmlicherweise ist auch einer elektrischen Maschine in einem Kraftfahrzeug ein passiver Brückengleichrichter zugeordnet. Je nach der Phasenzahl der zugehörigen elektrischen Maschine ist dieser beispielsweise in sechs- oder zehnpulsiger Ausführung vorgesehen. Die vorliegende Erfindung ist ausdrücklich nicht auf bestimmte Phasenzahlen beschränkt.

Passive Gleichrichter besitzen eine durch die Dioden und den Ausgangsstrom vorgegebene, beträchtliche Verlustleistung. Durch schaltungstechnische Maßnahmen (z.B. Parallelschalten von Dioden) lässt sich diese nur unwesentlich verkleinern. Anstelle eines passiven Brückengleichrichters kann daher zur Reduzierung der Verlustleistung ein aktiver Brückengleichrichter eingesetzt werden. Bei diesem sind die Dioden durch aktive Schalter (z.B. MOS-Transistoren) ersetzt. Aktive (ansteuerbare) Brückengleichrichter sind allgemein bekannt und können mit unterschiedlichen, ansteuerbaren Schaltelementen versehen sein. Nachfolgend werden die gleichrichtenden Schaltelemente eines entsprechenden aktiven Brückengleichrichters vereinfacht als Halbleiterstromventile bezeichnet, wobei sich versteht, dass diese Halbleiterstromventile ansteuerbar sind, d.h. durch ein Ansteuersignal von einem nichtleitenden in einen leitenden Zustand überführt werden können und umgekehrt. Es handelt sich bei Halbleiterstromventilen insbesondere um Transistoren, beispielsweise um MOS-Transistoren. Die vorliegende Erfindung bezieht sich auf Verbesserungen im Betrieb entsprechender aktiver Brückengleichrichter. Ist daher nachfolgend vereinfacht von einem Gleichrichter die Rede, sei hierunter ein aktiver Brückengleichrichter verstanden.

Weil Generatoren der erläuterten Art häufig eine hohe Induktivität im Erregerfeld und damit eine hohe Zeitkonstante in der Regelung besitzen, müssen Schutzstrategien eingesetzt werden, die bei Lastabwürfen oder Lastabschaltungen (nachfolgend wird für beide Fälle der Begriff Lastabwurf, engl. Load Dump, verwendet) negative Effekte verhindern. Bei einem Lastabwurf handelt es sich um ein Ereignis, bei dem sich bei hoch erregter Maschine und einem entsprechend hohen abgegebenem Strom die Last am Generator bzw. dem zugehörigen Gleichrichter schlagartig verringert und nicht durch kapazitiv wirkende Elemente im Bordnetz, beispielsweise durch eine Batterie, abgefangen werden kann.

Aufgrund der Induktivität des Erregerfeldes ändert sich der Generatorausgangsstrom langsamer als der Laststrom, sodass der Generator für eine Dauer von bis zu ca. 300 bis 500 Millisekunden mehr Energie ins Bordnetz liefert als dieses abzunehmen in der Lage ist. Die überschüssige Energie kann in einem (passiven) Brückengleichrichter umgesetzt werden, so dass elektrische Komponenten, die mit dem Generator bzw. dem zugehörigen Gleichrichter verbunden sind, vor Schädigung durch Überspannung geschützt sind.

Herkömmliche, passive Brückengleichrichter sind zu diesem Zweck i.d.R. mit Leistungs-Zenerdioden als Gleichrichterelementen versehen, die die überschüssige Energie in Wärme umsetzen können und auftretende Überspannungen klammern. Entsprechende Dioden bieten eine ausreichend gute Aufbau- und Verbindungstechnik mit einer flächendeckenden thermischen Anbindung. Da nach derzeitigem Stand der Technik die Umsetzung der Verlustenergie in Wärme bei Halbleiterstromventilen wie MOS-Transistoren nicht in dem Maße möglich ist wie bei den erwähnten Dioden, müssen für die Bewältigung von Lastabwürfen in aktiven Brückengleichrichtern andere Maßnahmen ergriffen werden, um zur Verhinderung von Schäden die überschüssige Generatorleistung abzufangen und Überspannungen zu begrenzen.

Nach einem Lastabwurf können dabei sämtliche Halbleiterstromventile eines Gleichrichterzweigs kurzgeschlossen werden. Auf diese Weise werden die Generatorphasen, die mit den entsprechenden Halbleiterstromventilen verbunden sind, kurzgeschlossen. Diese Maßnahme bzw. dieser Zustand wird daher nachfolgend auch als Phasenkurzschluss bezeichnet. Entsprechende Phasenkurzschlüsse werden herkömmlicherweise derart geschaltet, dass die Ausgangsspannung des Gleichrichters ein definiertes Spannungsband nicht verlässt. Mit anderen Worten wird bei der Überschreitung eines oberen Spannungsschwellwerts ein Phasenkurzschluss durch gleichzeitiges Ansteuern der Halbleiterstromventile des entsprechenden Zweigs eingeleitet und bei Unterschreiten eines unteren Spannungsschwellwerts durch Beendigung der gleichzeitigen Ansteuerung und Übergang in die reguläre Gleichrichtung wieder aufgehoben. Eine solche Lösung zeigt beispielsweise die US 2014/0055894 A1.

Zur Vermeidung einer ungewollten Aktivierung und Deaktivierung des Phasenkurzschlusses, beispielsweise aufgrund von kurzzeitigen positiven und negativen Spannungsspitzen an den Gleichspannungsausgängen des Gleichrichters, wird üblicherweise im Rahmen eines entsprechenden Verfahrens eine Filterung oder ein Totzeitglied verwendet. Die Phasenkurzschlüsse werden daher erst dann eingeleitet oder aufgehoben, wenn die Ausgangsspannung des Gleichrichters eine vorbestimmte Zeit oberhalb des oberen bzw. unterhalb des unteren Schwellwerts liegt. Nachfolgend wird ein entsprechendes Vorgehen damit umschrieben, dass eine Tot- oder Filterzeit verwendet wird. Die konkrete Ausgestaltung, beispielsweise mittels Totzeiten oder der Verwendung entsprechend parametrierter Filter, ist nicht relevant. Ein solches Vorgehen kann jedoch in bestimmten Fällen von Lastabwürfen, wie auch nachfolgend noch erläutert, nachteilig sein.

Die vorliegende Erfindung stellt sich daher die Aufgabe, aus dem Stand der Technik bekannte Verfahren zur Bewältigung von Lastabwürfen, und damit zur Ansteuerung aktiver Brückengleichrichter, zu verbessern.

### Offenbarung der Erfindung

Erfindungsgemäß werden ein Verfahren zum Betreiben eines aktiven Brückengleichrichters sowie Mittel zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

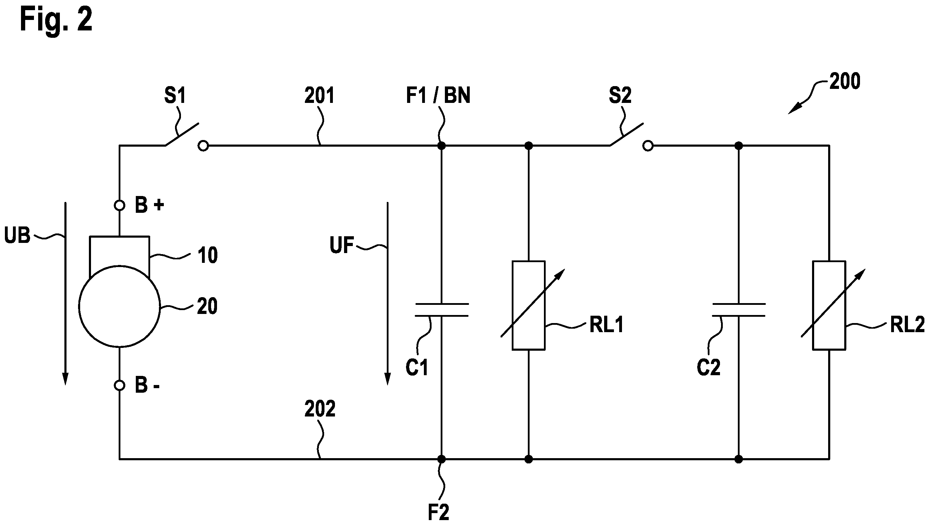

Wie auch unter Bezugnahme auf die Figur 2 noch ausführlich erläutert, kann ein Lastabwurf durch einen Unterbrechung eines Kabels am oder nahe dem positiven Gleichspannungsanschluss des Gleichrichters (nachfolgend auch als Kabelabriss bzw. Fall A bezeichnet) oder aber durch eine Abschaltung eines Verbrauchers oder eine entsprechende Unterbrechung in gewisser Distanz zum Gleichrichter (nachfolgend auch als Fall B bezeichnet) auftreten. Im ersteren Fall sind typischerweise keine oder nur geringe Kapazitäten, beispielsweise in Form von Kabeln, mehr an den positiven Gleichspannungsanschluss des Gleichrichters angebunden, im letzteren Fall hingegen schon.

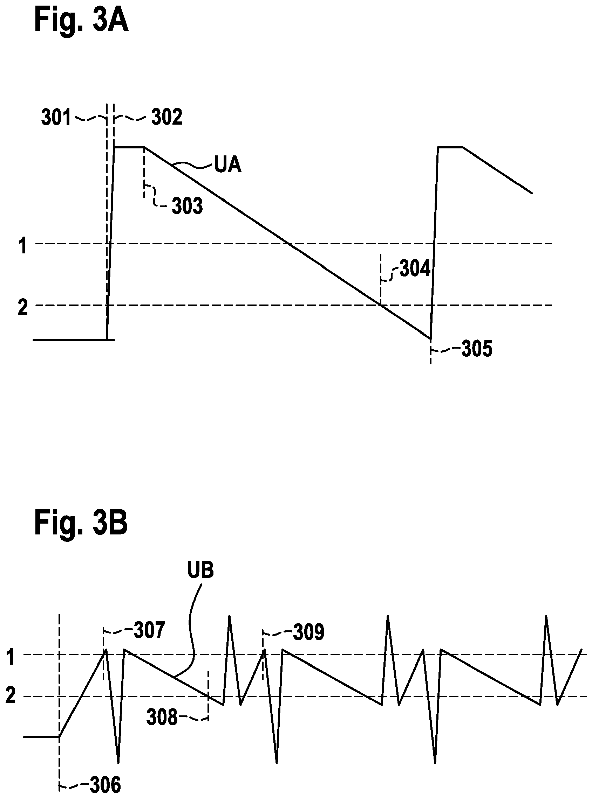

Bei einem Kabelabriss, d.h. Fall A, steigt die Spannung am positiven Gleichspannungsanschluss, wie auch unter Bezugnahme auf die Figur 3A erläutert, wegen des Fehlens nennenswerter Kapazitäten sehr rasch stark an. Wird im Rahmen der eingangs erläuterten Spannungsauswertung eine Tot- bzw. Filterzeit verwendet, wird während dieser der Phasenkurzschluss noch nicht eingeleitet. Bis zur Einleitung des Phasenkurzschlusses muss die die Spannung daher durch eine zusätzliche lineare Klammerung oder den Durchbruch der Halbleiterstromventile des aktiven Gleichrichters (diese weisen typischerweise ein entsprechendes Verhalten auf) mit hohen Verlustleistungen begrenzt werden. Die Verwendung einer entsprechenden Tot- bzw. Filterzeit ist daher hier nachteilig.

Typischerweise sind an den positiven und den negativen Gleichspannungsanschluss des Gleichrichters jeweils Leitungsabschnitte von beispielweise ca. 1,5 Metern und einem Kabelquerschnitt von beispielsweise ca. 25 Quadratmillimetern angeschlossen. Diese Leitungsabschnitte sind jeweils mit den Anschlüssen eines Kondensators an einem Fremdstartstützpunkt verbunden. Erfolgt nun eine Lastabschaltung jenseits des Leitungsabschnitts am positiven Gleichspannungsanschluss, d.h. liegt Fall B vor, und wird dieser durch repetitive Phasenkurzschlüsse im Gleichrichter beantwortet, kommt in diesem Leitungsabschnitt zu schnellen Stromänderungen, da der Generatorstrom abwechselnd nach Masse bzw. in Richtung des Kondensators am Fremdstartstützpunkt abgegeben wird. Diese Stromänderungen erzeugen in dem Leitungsabschnitt aufgrund dessen Induktivität induzierte Spannungen. Es kommt daher zu entsprechenden positiven und negativen Spannungsspitzen in der Spannung an den Gleichspannungsanschlüssen des Gleichrichters. In Fall B ist die Verwendung einer Totzeit bzw. eines Filters im Gegensatz zu Fall A weniger nachteilig, da die Spannung aufgrund der hier noch vorhandenen Kapazitäten vor der Einleitung des ersten Phasenkurzschlusses langsamer ansteigt.

Grundsätzlich ist es möglich, eine Fallunterscheidung zwischen Fall A und Fall B zu treffen und die Totzeit bei Erkennung von Fall A kontinuierlich abzusenken bzw. Filterparameter anzupassen. Die Fallunterscheidung kann beispielsweise auf Grundlage einer Auswertung der Steilheit des Spannungsanstiegs (die sich, wie erwähnt, zwischen Fall A und Fall B unterscheidet), getroffen werden. Bei einem derartigen Vorgehen ist jedoch beim erstmaligen Auftreten einer entsprechenden Überspannung die Filterzeit noch nicht angepasst. Daher muss hier die gleiche Energie umgesetzt werden wie ohne eine derartige Maßnahme, was die Halbleiterstromventile bereits zerstören kann. Eine Unterscheidung der beiden Fälle anhand der Spannungssteilheit ist ferner schwer detektierbar, da die erwähnten induktiven Spannungsspitzen (siehe auch die beigefügte Figur 3B) kaum geringere Steilheiten wie der Spannungsanstieg im Fall A aufweisen.

Ein wesentlicher Aspekt des im Rahmen der vorliegenden Erfindung vorgeschlagenen Verfahrens ist daher der, zusätzlich zu den bereits erwähnten Schwellwerten (dem oberen Schwellwert, bei dem ein Phasenkurzschluss eingeleitet wird, nachfolgend erster Schwellwert bezeichnet, und dem unteren Schwellwert, bei dem der Phasenkurzschluss wieder aufgehoben wird, nachfolgend auch als zweiter Schwellwert bezeichnet), einen, vorzugsweise zwei, weitere Schwellwerte zu verwenden und die zwischen den Gleichspannungsanschlüssen des Gleichrichters anliegende Spannung entsprechend auszuwerten. Diese Auswertung wird im Rahmen der vorliegenden Erfindung in einem vorgegebenen Zeitfenster direkt nach Aktivierung bzw. Deaktivierung eines Phasenkurzschlusses vorgenommen. Da die Form eines Spannungspulses bzw. der Spannungsverlauf direkt nach der Einleitung bzw. Aufhebung eines Phasenkurzschlusses in Fall A und Fall B deutlich unterschiedlich sind, ist damit eine unterschiedliche Behandlung im Sinne einer Verwendung kürzerer Filterzeiten möglich.

Die vorliegende Erfindung schlägt daher ein Verfahren zum Betreiben eines aktiven Brückengleichrichters, der über Phasenanschlüsse mit einer generatorisch betreibbaren elektrischen Maschine in einem Bordnetz eines Kraftfahrzeugs verbunden ist und Gleichspannungsanschlüsse aufweist, vor. In einem generatorischen Betrieb der elektrischen Maschine werden mittels des Brückengleichrichters zu Einleitungszeitpunkten, zu welchen Einleitungsbedingungen vorliegen, zwischen den Phasenanschlüssen Phasenkurzschlüsse eingeleitet und jeweils erst zu Aufhebungszeitpunkten, zu welchen Aufhebungsbedingungen vorliegen, wieder aufgehoben. Zur Ermittlung der Einleitungs- und Aufhebungszeitpunkte wird, wie grundsätzlich aus dem Stand der Technik bekannt, eine Spannung zwischen den Gleichspannungsanschlüssen mit einem oberen (ersten) Schwellwert und einem zweiten Schwellwert unterhalb des ersten Schwellwerts verglichen. Erfindungsgemäß ist vorgesehen, dass die Spannung zur Ermittlung der Einleitungszeitpunkte ferner mit einem dritten Schwellwert oberhalb des ersten Schwellwerts verglichen wird. Auf diese Weise ist es im Rahmen der vorliegenden Erfindung möglich, Fall A und Fall B unterschiedlich zu behandeln und in Fall A eine Spannungsklammerung durch den Gleichrichter bzw. dessen Halbleiterstromventile so kurz wie möglich zu halten.

Es ist dabei im Rahmen des erfindungsgemäßen Verfahrens vorgesehen, dass die Einleitung der Phasenkurzschlüsse jeweils früher vorgenommen wird, wenn festgestellt wird, dass die Spannung innerhalb eines vorgegebenen Zeitfensters nach dem Aufhebungszeitpunkt den dritten Schwellwert mindestens für einen Mindestüberschreitungszeitraum überschritten hat. Auf diese Weise werden entsprechende Belastungen verringert.

Insbesondere kann vorgesehen sein, dass die Einleitung der Phasenkurzschlüsse jeweils sofort vorgenommen wird, sobald festgestellt wird, dass die Spannung innerhalb des vorgegebenen Zeitfensters nach dem Aufhebungszeitpunkt den dritten Schwellwert mindestens für den Mindestüberschreitungszeitraum überschritten hat. Im Gegensatz zum Stand der Technik wird hier also neben der Überschreitung des ersten Schwellwerts ein zusätzliches Kriterium definiert, das zu einer direkten, schnelleren Einleitung eines Phasenkurzschlusses führt, und das im oben erläuterten Fall A zur Anwendung gelangt.

Erfolgt eine entsprechende Überschreitung des dritten Schwellwerts nicht, wird eine herkömmliche Überprüfung einer Überschreitung des ersten Schwellwerts vorgenommen. Es ist also vorgesehen, dass, wenn jeweils festgestellt wird, dass die Spannung innerhalb des vorgegebenen Zeitfensters nach dem Aufhebungszeitpunkt den dritten Schwellwert nicht oder nicht mindestens für den Mindestüberschreitungszeitraum überschritten hat, die Phasenkurzschlüsse erst dann eingeleitet werden, wenn danach die Spannung den ersten Schwellwert für mehr als einen Mindestüberschreitungszeitraum überschritten hat. Auf diese Weise wird der oben erläuterte Fall B durch die vorliegende Erfindung behandelt.

Eine Weiterbildung des erfindungsgemäßen Verfahrens sieht vor, dass die Spannung zur Ermittlung der Aufhebungszeitpunkte mit einem vierten Schwellwert unterhalb des zweiten Schwellwerts verglichen wird. Auf diese Weise lässt sich auch für die Aufhebung der Phasenkurzschlüsse eine vorteilhafte Unterscheidung zwischen Fall A und Fall B vornehmen, wie nachfolgend erläutert.

Im Rahmen des erfindungsgemäßen Verfahrens wird vorteilhafterweise ein Brückengleichrichter mit ansteuerbaren Halbleiterstromventilen mit einer Durchbruchsspannung verwendet, wobei der dritte Schwellwert unterhalb der Durchbruchsspannung liegt. Der erste Schwellwert und der zweite Schwellwert liegen vorteilhafterweise oberhalb einer regulären Betriebsspannung des Bordnetzes.

Eine erfindungsgemäße Recheneinheit, z.B. ein Steuergerät eines Brückengleichrichters, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnungen

Figur 1 zeigt schematisch einen Generator mit einem Brückengleichrichter.
Figur 2 zeigt schematisch ein Ersatzschaltbild eines Bordnetzes.
Figur 3A und 3B zeigen schematische Spannungsverläufe bei Lastabwurf.
Figur 4 zeigt schematische Spannungsverläufe bei Lastabwurf.
Figur 5A und 5B veranschaulichen Ausführungsformen der Erfindung.

### Ausführungsform(en) der Erfindung

In den Figuren tragen einander entsprechende Elemente identische Bezugszeichen und werden der Übersichtlichkeit halber nicht wiederholt erläutert.

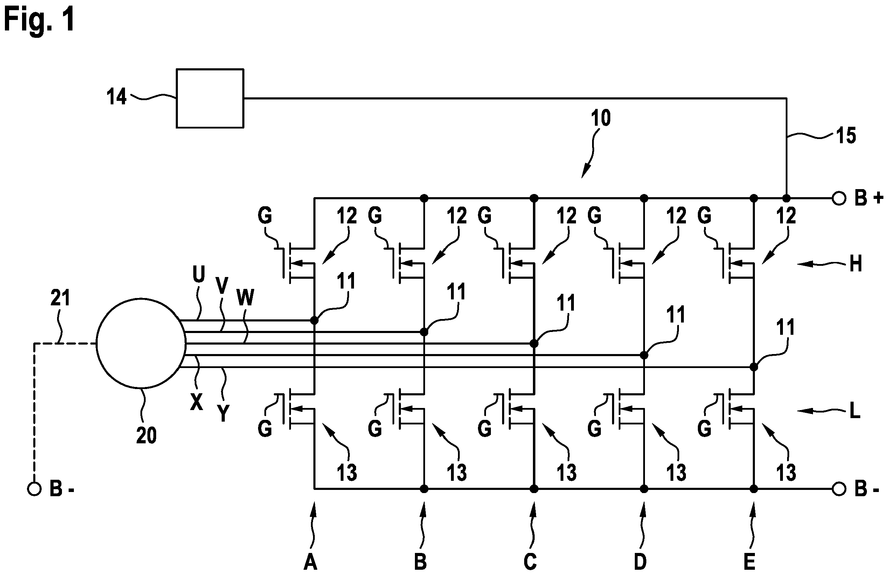

In Figur 1 ist eine herkömmliche Anordnung 100 mit einem zehnpulsigen Brückengleichrichter 10 und einem fünfphasigen Generator 20 schematisch veranschaulicht. Wie erwähnt, eignet sich die Erfindung auch für Brückengleichrichter und Generatoren mit anderen Puls- und Phasenzahlen.

Der Brückengleichrichter 10 weist fünf Halbbrücken A bis E auf, die jeweils über einen Mittelabgriff 11 mit den Generatorphasen bzw. entsprechenden Phasenanschlüssen U bis Y des Generators 20 verbunden sind. Die Halbbrücken sind mit ihren Enden jeweils mit Gleichspannungsanschlüssen B+ und B-, beispielsweise Versorgungsleitungen 201 und 202 eines Bordnetzes 200, wie es in Figur 2 gezeigt ist, verbunden. Der Anschluss B- kann auch auf Masse liegen. Auch der Generator 20 kann eine entsprechende Verbindung zu dem Gleichspannungsanschluss B- aufweisen, beispielsweise ein Massekabel 21.

Die Halbbrücken A bis E weisen jeweils ansteuerbare Halbleiterstromventile 12 und 13 auf, die hier als Transistoren veranschaulicht und jeweils in einen oberen Zweig H (Highside) und einen unteren Zweig L (Lowside) der einzelnen Halbbrücken A bis E eingebunden sind. Die Halbleiterstromventile 12 und 13 können gleich oder unterschiedlich zueinander ausgebildet sein.

Die Beschaltung der Halbleiterstromventile 12 und 13 erfolgt über ihre jeweiligen Gateanschlüsse G mittels einer Steuereinrichtung 14, beispielsweise einer Gleichrichtersteuerung, über nicht dargestellte Ansteuerleitungen. Dabei kann eine Steuereinrichtung 14 für alle Halbbrücken A bis E gemeinsam vorgesehen sein. Alternativ dazu kann auch jede der Halbbrücken A bis E eine individuelle Steuereinrichtung aufweisen (nicht gezeigt).

Ein Lastabwurf kann in der Anordnung 100 auf Grundlage einer zwischen den Gleichspannungsanschlüssen B+ und B- anliegenden Spannung detektiert werden. Hierzu ist die Steuereinrichtung 14 über eine Leitung 15 mit dem Gleichspannungsanschluss B+ verbunden. Wird durch die Steuereinrichtung 14 erkannt, dass ein definierter oberer Spannungsschwellwert (hier als erster Schwellwert bezeichnet) mindestens für einen vorbestimmten Mindestüberschreitungszeitraum überschritten wurde, wird durch die Steuereinrichtung 14 herkömmlicherweise auf einen Lastabwurf erkannt.

Die Ansteuerung des Gleichrichters 10 bei einem erkannten Lastabwurf kann umfassen, die Phasenanschlüsse U bis Y kurzzuschließen. In der Folge fällt der in das angeschlossene Bordnetz über die Gleichspannungsanschlüsse B+ und B- eingespeiste Strom auf Null ab, die über die Leitung 15 erfasste Spannung sinkt. Der Phasenkurzschluss wird herkömmlicherweise so lange beibehalten, bis die zwischen den Gleichspannungsanschlüssen B+ und B- anliegende Spannung mindestens für einen vorgegebenen Mindestunterschreitungszeitraum unter einen weiteren Spannungsschwellwert (hier als zweiter Schwellwert bezeichnet) sinkt. Ein entsprechender Phasenkurzschluss kann durch ein gleichzeitiges Ansteuern und damit Leitendschalten der Halbleiterstromventile 12 einerseits oder 13 andererseits, also der Halbleiterstromventile eines Gleichrichterzweigs H oder L, hergestellt werden. Typisch ist ein Phasenkurzschluss durch Ansteuern der Halbleiterstromventile 13.

In Figur 2 ist ein Ersatzschaltbild eines Bordnetzes eines Kraftfahrzeugs dargestellt und insgesamt mit 200 bezeichnet. In diesem sind ebenfalls ein Generator 20 und ein Gleichrichter 10, beispielsweise wie in Figur 1, dargestellt.

An dem Generator 20 mit dem Gleichrichter 10 liegt eine Spannung UB an, wie durch einen entsprechend beschrifteten Pfeil veranschaulicht. Diese Spannung entspricht der zwischen den Gleichspannungsanschlüssen B+ und B- anliegende Spannung. Der Anschluss B- ist hier am Generator 10 dargestellt, da der Generator 10 und der Gleichrichter 20 ein gemeinsames Bezugspotential in Form dieses Gleichspannungsanschlusses B- aufweisen können, beispielsweise Masse. Die Kondensatoren C1 und C2 sowie die Lastwiderstände RL1 und RL2 repräsentieren Kondensatoren bzw. Verbraucher eines Bordnetzes.

Der Kondensator C1 entspricht einem Kondensator an einem Fremdstartstützpunkt des Bordnetzes 200. Die Anschlüsse F1 und F2 sind zur Starthilfe vorgesehen. Der Kondensator C1 ist dazu vorgesehen, Spannungsschwankungen im Bordnetz abzupuffern. Die über den Kondensator C1 abfallende Spannung ist ebenfalls mit einem Pfeil veranschaulicht und mit UF bezeichnet.

Zwischen dem Gleichspannungsanschluss B+ und dem Anschluss F1 und zwischen dem Gleichspannungsanschluss B- und dem Anschluss F2 sind jeweils Leitungen bzw. Leitungsabschnitte 201 und 202 mit einer Länge von typischerweise 1,5 bis 2 Metern und einem Querschnitt von beispielsweise 25 Quadratmillimetern eingebunden. Diese bilden im elektrischen Ersatzschaltbild der Figur 2 im Wesentlichen Induktivitäten, beispielsweise mit einem Wert von 2 Mikrohenry.

Die Schalter S1 und S2 veranschaulichen die mehrfach erläuterten Fälle A und B von Lastabwürfen. Bei einem Lastabwurf nahe des oder direkt am Gleichspannungsanschluss B+ (entspricht einem Öffnen des Schalters S1) liegt Fall A vor, bei einer Abschaltung eines Verbrauchers im Bordnetz 200 (entspricht einem Öffnen des Schalters S2) liegt Fall B vor. In Fall A ist die Kapazität der Leitung zwischen dem Gleichspannungsanschluss B+ und dem Anschluss F1 weiter vorhanden, im Fall B fällt diese teilweise oder völlig weg.

Die sich hieraus ergebenden Effekte sind unter Bezugnahme auf die Figuren 3A und 3B veranschaulicht, wobei die Figur 3A den erläuterten Fall A und die Figur 3B den erläuterten Fall B veranschaulicht. In den Figuren 3A und 3B sind jeweils Spannungsverläufe der zwischen den Gleichspannungsanschlüssen B+ und B-anliegenden Spannung in Volt auf der Ordinate gegenüber einer Zeit auf der Abszisse dargestellt und in Figur 3A mit UA und in Figur 3B mit UB bezeichnet. Diese Bezeichnungen gelten für die nachfolgenden Figuren fort.

Gemäß Figur 3A entspricht die Spannung UA bis zu einem Zeitpunkt 301 dem eingeregelten Normalwert im Bordnetz, beispielsweise 14 Volt. Zu dem Zeitpunkt 301 kommt es zu einem Lastabwurfsereignis, aufgrund dessen die Spannung UA aufgrund der fehlenden Kapazitäten schlagartig stark ansteigt. Zu einem Zeitpunkt 302 erreicht die Spannung UA einen Wert, bei dem beispielsweise eine Klammerfunktion aktiviert bzw. die Durchbruchsspannung der verwendeten Halbleiterstromventile erreicht wird. Gleichzeitig hat die Spannung einen definierten oberen (ersten) Schwellwert 1 überschritten, so dass mit einer entsprechenden Verzögerung aufgrund eine Tot- bzw. Filterzeit ein Phasenkurzschluss eingeleitet wird. Da der Spannungsanstieg im Fall A bzw. gemäß Figur 3A sehr steilflankig ist, beeinflussen die Tot- bzw. Filterzeit die Länge des Zeitraums, in dem die Generatorausgangsspannung nur durch eine Spannungsklammerung mit sehr hoher Verlustleistung begrenzt wird. Dieser Zeitraum liegt in der Darstellung gemäß Figur 3A zwischen dem Zeitpunkt 302 und einem Zeitpunkt 303.

Nach dem Einleiten eines Phasenkurzschlusses zu dem Zeitpunkt 303 oder knapp davor sinkt die Spannung ab, bis sie zu einem Zeitpunkt 304 einen entsprechenden unteren (zweiten) Schwellwert 2 erreicht. Wiederum mit einer entsprechenden Verzögerung aufgrund einer Tot- bzw. Filterzeit, nämlich erst zu einem Zeitpunkt 305, wird der Phasenkurzschluss wieder aufgehoben. Der Zeitpunkt 305 entspricht dem Zeitpunkt 301, das Verfahren setzt sich daher wie erläutert fort, bis eine ausreichende Entregung des Generators eingetreten bzw. die Spannung ausgeregelt ist und der obere (erste) Schwellwert 1 daher nicht mehr erreicht wird.

Gemäß Figur 3B entspricht die Spannung UB bis zu einem Zeitpunkt 306 ebenfalls dem eingeregelten Normalwert, beispielsweise 14 Volt. Zu dem Zeitpunkt 306 kommt es zu einem Lastabwurfsereignis, aufgrund dessen die Spannung nun aber aufgrund der vorhandenen Kapazitäten (im Gegensatz zu Fall A bzw. Figur 3A) langsamer ansteigt. Zu einem Zeitpunkt 307 erreicht diese den oberen (ersten) Schwellwert 1. Da der Spannungsanstieg im Fall B bzw. gemäß Figur 3B relativ flach ist, beeinflusst die Tot- bzw. Filterzeit die Länge des Zeitraums, in dem die Generatorausgangsspannung nur durch eine Spannungsklammerung mit sehr hoher Verlustleistung begrenzt wird, kaum, bzw. ist ein entsprechender Zeitraum nicht vorhanden.

Wird gemäß Figur 3B nun, kurz nach dem Zeitpunkt 307 (mit Verzögerung durch die Tot- bzw. Filterzeit), ein Phasenkurzschluss eingeleitet, kommt es zu einer negativen Spannungsspitze aufgrund der vorhandenen Induktivitäten. Diese unterschreitet den unteren (zweiten) Schwellwert 2. Weil aber eine entsprechende Tot- bzw. Filterzeit vorhanden ist, wird dies ausgeblendet, weil die Schwellwertunterschreitung zu kurz ist. Nach der negativen Spannungsspitze sinkt die Spannung vergleichsweise langsam ab und erreicht zu einem Zeitpunkt 308 den unteren (zweiten) Schwellwert 2. Der Phasenkurzschluss wird daher kurz danach wieder aufgehoben. Hierdurch kommt es zu einer positiven Spannungsspitze. Diese überschreitet den oberen (ersten) Schwellwert 1, wird aber ebenfalls ausgeblendet. Nach der positiven Spannungsspitze steigt die Spannung vergleichsweise langsam an, bis sie zu einem Zeitpunkt 309 wieder den oberen (ersten) Schwellwert 1 erreicht. Der Zeitpunkt 309 entspricht dem Zeitpunkt 307, das Verfahren setzt sich daher wie erläutert fort, bis eine ausreichende Entregung des Generators eingetreten bzw. die Spannung ausgeregelt ist und der obere (erste) Schwellwert 1 daher nicht mehr erreicht wird.

Aus Figur 3B wird ersichtlich, weshalb in Fall B eine Totzeit bzw. ein entsprechender Filter verwendet werden muss, nämlich deshalb, um zu verhindern, dass es durch die gezeigten negativen und positiven Spannungsspitzen (und der entsprechenden Unter- bzw. Überschreitung der Schwellwerte 1 und 2) zu einem vorzeitigen Einleiten bzw. Aufheben der Phasenkurzschlüsse kommt. Entsprechende Totzeiten bzw. Filterfunktionen sind jedoch in Fall A, wie mehrfach erwähnt, ausgesprochen nachteilig.

Die Filter- bzw. Totzeit muss einerseits so groß gewählt werden, dass die Spannungsspitzen im Fall B nicht zu fälschlicher Aktivierung des Phasenkurzschlusses führen, soll aber andererseits so klein wie möglich sein, um im Fall A während der Spannungsklammerung dissipierte Energie minimal zu halten. Auch die negative Spannungsspitze, die im Fall B beim Aktivieren des Phasenkurzschlusses auftritt, muss mit einer entsprechenden Filter- bzw. Totzeit ausgeblendet werden, um keine vorzeitige Deaktivierung des Phasenkurzschlusses zu triggern. Dies hat im Fall A jedoch aufgrund der verglichen mit Fall B deutlich schnelleren Entladung des Versorgungsknotens unter Umständen Unterspannungen zur Folge, die entweder einen Reset oder unerwünschtes Eingreifen des Generatorreglers nach sich ziehen können.

Die Breite Δt der auftretenden Spannungsspitzen im Fall B kann abgeschätzt werden über Δt = L (iₒ / u_{L}), wobei L die Induktivität des zuvor diskutierten Leitungsabschnitts, u_{L} der Spannungsabfall über L und i₀ die Stromänderung, die in der Zeit Δt erfolgt, ist. Die Stromänderung i₀ hängt ab von der Höhe des durch den Phasenkurzschluss geschalteten Stroms und der Geschwindigkeit, mit der die Halbleiterstromventile des aktiven Gleichrichters geschaltet werden. Soll diese Spannungsspitze durch einen zeitlichen Filter mit einer bestimmten Zeit t_{F} ausgefiltert werden, so muss die Bedingung Δt < t_{F} erfüllt sein. Aus dieser Gleichung ist ersichtlich, dass die Dauer der Spannungsspitze reduziert werden kann durch Erhöhung von u_{L}. Die Erfindung macht sich diese Tatsache zunutze.

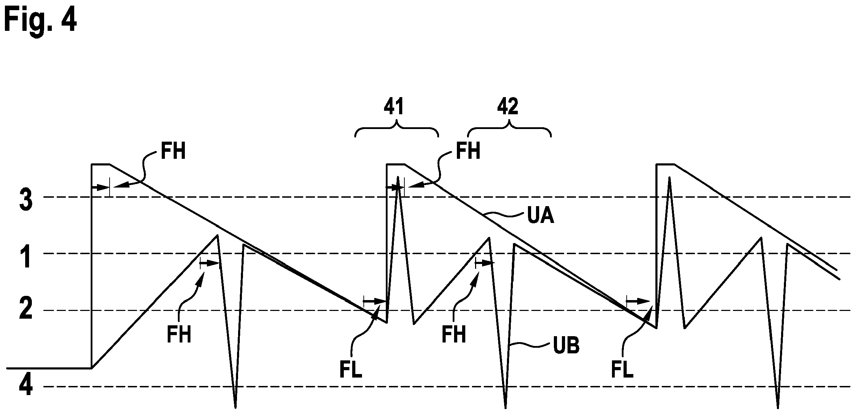

Um den erwähnten Zielkonflikt aufzulösen, schlägt die vorliegende Erfindung vor, weitere Spannungsschwellen auszuwerten, was unter Bezugnahme auf die Figur 4 hergeleitet wird. In Figur 4 sind die Spannungsverläufe UA bzw. UB (vgl. Figur 3A und 3B) in einem gemeinsamen Diagramm in Volt auf der Ordinate gegenüber einer gemeinsamen Zeitachse gezeigt. Diese entsprechen noch nicht der Erfindung sondern dienen dazu, die Erfindung zu veranschaulichen.

Der höhere der zusätzlichen Schwellwerte (hier als dritter Schwellwert bezeichnet und in Figur 4 und den nachfolgenden Figuren mit 3 veranschaulicht), der oberhalb des ersten Schwellwerts liegt, dient für eine bestimmte Zeit nach Aufheben eines Phasenkurzschlusses als Kriterium zur Wiederaktivierung des Phasenkurzschlusses mit deutlich kürzerer Tot- bzw. Filterzeit. Dies wird in einem Bereich 41 der Figur 4 unter Bezugnahme auf die Spannung UA veranschaulicht. Hier wurde der dritte Schwellwert 3 von der Spannung UA für einen Mindestüberschreitungszeitraum FH überschritten und es wurde unmittelbar zuvor ein Phasenkurzschluss gelöst. Von der Spannung UB wäre der dritte Schwellwert 3 hingegen nur sehr kurz, d.h. für weniger als den Mindestüberschreitungszeitraum FH, überschritten worden. Daher kann auf Grundlage der Überschreitung des dritten Schwellwerts 3 für mindestens den Mindestüberschreitungszeitraum FH festgestellt werden, dass Fall A vorliegt, keine negative Spannungsspitze zu erwarten ist, die ausgeblendet werden müsste, und daher eine kürzere Filterzeit verwendet werden kann.

Der niedrigere der zusätzlichen Schwellwerte (hier als vierter Schwellwert bezeichnet und in Figur 4 mit TH4 veranschaulicht), der unterhalb des zweiten Schwellwerts liegt, dient für eine bestimmte Zeit nach Aktivierung des Phasenkurzschlusses als Kriterium zur Deaktivierung des Phasenkurzschlusses mit kürzerer Tot- bzw. Filterzeit. Dies wird in einem Bereich 42 der Figur 4 unter Bezugnahme auf die Spannung UB veranschaulicht. Hier wird der vierte Schwellwert 4 von der Spannung UB unterschritten und es wurde unmittelbar zuvor ein Phasenkurzschluss eingeleitet. Von der Spannung UA wäre der vierte Schwellwert 4 nicht unterschritten worden. Daher kann auf Grundlage der Unterschreitung des vierten Schwellwerts 4 festgestellt werden, dass Fall B vorliegt und es können geeignete Maßnahmen getroffen werden.

In einer Abwandlung können die beiden zusätzlichen Spannungsschwellen 3 und 4 oder kann eine hiervon zudem ohne zeitliche Einschränkung dauerhaft parallel zu den vorhandenen Schwellwerten 1 und 2 zur Aktivierung bzw. Deaktivierung des Phasenkurzschlusses eingesetzt werden. In einer derartigen Umsetzung kann in einer zusätzlichen Auswertung direkt zwischen Fall A und Fall B unterschieden werden und die Ansteuerung der Halbleiterstromventile kann auf die beiden Fälle angepasst werden mit einer weiteren Reduzierung des Verlustleistungseintrags im Fall A (durch schnelleres Schalten des Phasenkurzschlusses als es im Fall B wegen der Zuleitungsinduktivität zweckmäßig ist).

Mit Pfeilen sind in Figur 4 jeweils die Zeiten veranschaulicht, in denen trotz Über- bzw. Unterschreitens der ersten und zweiten Schwellwerte 1, 2 noch kein Phasenkurzschluss eingeleitet oder aufgehoben wird, also entsprechende Tot- bzw. Filterzeiten. Betreffen diese Überschreitungen von entsprechenden Schwellwerten, hier des ersten und dritten Schwellwerts 1, 3, sind diese mit FH bezeichnet. Betreffen diese Unterschreitungen von entsprechenden Schwellwerten, hier des zweiten und vierten Schwellwerts 2, 4, sind diese mit FL bezeichnet.

In dem in Figur 4 veranschaulichten Verfahren, bei dem diese Zeiträume noch dem Stand der Technik entsprechen, können einige Nachteile auftreten. Es wird erkennbar dass die dargestellten Ausblendzeiten neben Ausblendung der Spannungsspitzen einige negative Nebeneffekte mit sich bringen. So wird im Fall A während des Zeitraums FH der Generatorausgangsstrom von einer Spannungsklammerung mit hoher Verlustleistung aufgenommen. Auch im Fall B steigt vor Aktivieren des Phasenkurzschlusses die Bordnetzspannung über den ersten Schwellwert 1 hinaus an, und zwar umso mehr, je länger die verwendete Tot- bzw. Filterzeit FL ist, was bei der Einstellung des ersten Schwellwerts 1 berücksichtigt werden muss.

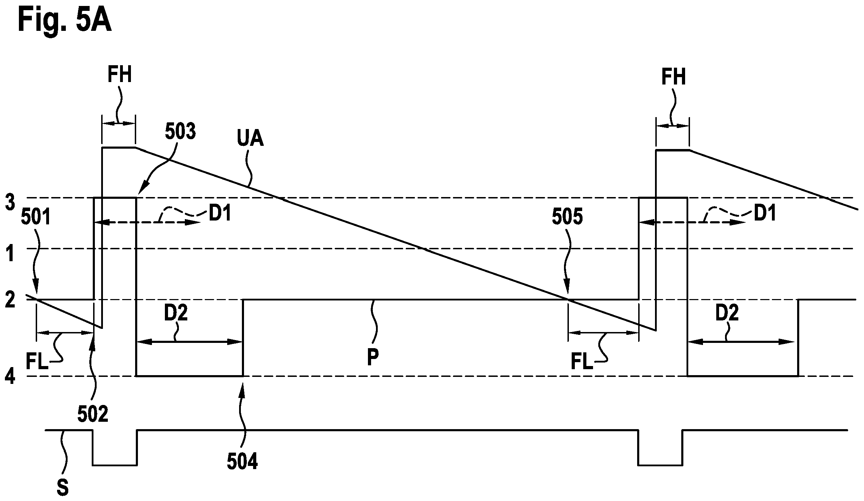

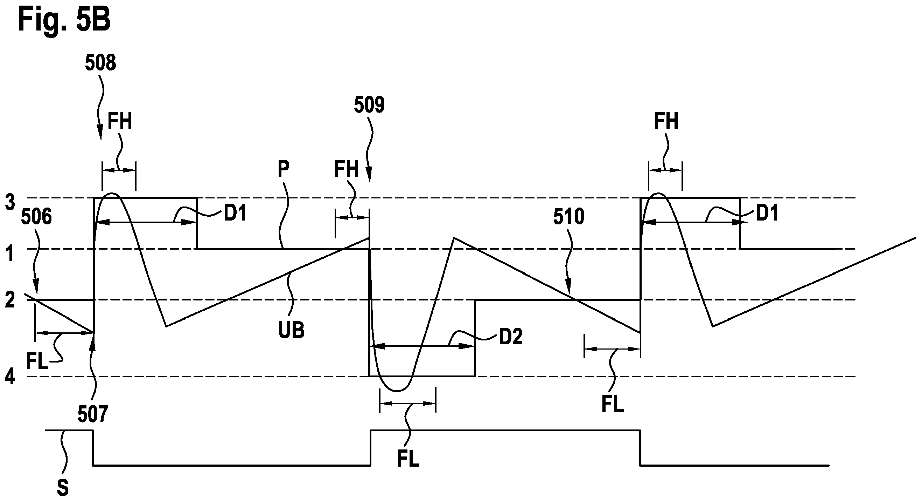

In den Figuren 5A und 5B sind die im Rahmen der vorliegenden Erfindung vorgeschlagenen Maßnahmen gemäß einer vorteilhaften Ausführungsform veranschaulicht, wobei Figur 5A wieder Fall A und Figur 5B wieder Fall B eines Lastabwurfs entspricht. Die Bezeichnung der Spannungen und Schwellwerte und deren Darstellung sind identisch wie in den vorigen Figuren. Zur Veranschaulichung ist dabei jeweils anhand eines (nicht notwendigerweise in der Praxis verwendeten) Signalpegels S veranschaulicht, ob ein Phasenkurzschluss aktiv (bei hohem Signalpegel) oder inaktiv (bei niedrigem Signalpegel) ist.

In Figur 5A unterschreitet die Spannung UA aufgrund eines Phasenkurzschlusses (siehe Signalpegel S) zu einem Zeitpunkt 501 den zweiten Schwellwert 2. Es beginnt eine erste Totzeit, die mit FL veranschaulicht ist und die den Mindestunterschreitungszeitraum definiert, der von der Spannung mindestens unterschritten werden, muss, bis ein entsprechender Phasenkurzschluss aufgehoben werden kann. Der Phasenkurzschluss wird also erst dann aufgehoben, wenn während des gesamten, mit FL angegebenen Zeitraums der zweite Schwellwert 2 unterschritten ist. In entsprechender Weise kann die Zeit FL auch über eine Filterfunktion bzw. Filterzeit definiert werden. Ist ein Zeitpunkt 502 erreicht (und zu diesem der zweite Schwellwert 2 noch unterschritten), wird (siehe Signalpegel S) der Phasenkurzschluss aufgehoben, so dass die Spannung UA schnell stark ansteigt Wie mit P veranschaulicht, wird nun so lange abgewartet, bis die Spannung UA den dritten Schwellwert 3 für mehr als einen vorgegebenen Mindestüberschreitungszeitraum FH überschreitet. Die maximale Wartezeit bzw. ein entsprechendes Zeitfenster ist mit D1 bezeichnet. Da die Spannung UA den dritten Schwellwert bereits vor der maximalen Warte zeit D1 entsprechend lange überschritten hat, ist diese Wartezeit D1 hier gestrichelt dargestellt.

Der Mindestüberschreitungszeitraum FH ist kürzer als ein regulärer Mindestüberschreitungszeitraum in einem bekannten Verfahren. Er definiert hier die Zeit, ab der ab einer Überschreitung des dritten Schwellwerts 3 frühestens wieder ein Phasenkurzschluss eingeleitet werden kann. Der Phasenkurzschluss wird dabei dann eingeleitet, wenn während der gesamten, mit FH angegebenen Zeit der dritte Schwellwert 3 überschritten ist. Dies ist zu einem Zeitpunkt 503 der Fall.

Nachdem der Phasenkurzschluss zu dem Zeitpunkt 503 eingeleitet wurde, sinkt die Spannung UA ab und es wird, wie mit P veranschaulicht, abgewartet, ob die Spannung UA den vierten Schwellwert unterschreitet. Die maximale Wartezeit bzw. ein entsprechendes Zeitfenster hierfür ist mit D2 bezeichnet. Da die Spannung UA den vierten Schwellwert 4 in dieser Wartezeit D2 nicht unterschreitet, wird ohne weitere Einleitung von Maßnahmen, wie mit P veranschaulicht, ab einem Zeitpunkt 504 erneut abgewartet, ob die Spannung UA den zweiten Schwellwert unterschreitet. Dies ist zu einem Zeitpunkt 505 der Fall, der grundsätzlich dem Zeitpunkt 501 entspricht, und ab dem das Verfahren wie oben erläutert fortschreitet.

Auch in Figur 5B unterschreitet die Spannung UB aufgrund eines Phasenkurzschlusses (siehe Signalpegel S) den zweiten Schwellwert 2 zu einem Zeitpunkt, der hier mit 506 bezeichnet ist. Es beginnt die erste Totzeit FL zu laufen. Zu weiteren Erläuterungen sei auf Figur 5A verwiesen.

Ist ein Zeitpunkt 507 erreicht, wird (siehe Signalpegel S) der Phasenkurzschluss aufgehoben, so dass die Spannung UB ansteigt. Die Spannung B ist hier gefiltert veranschaulicht, was dem realen Verlauf genauer entspricht als die schematische Darstellung in Figur 3B und 4. Die vorliegenden Induktivitäten des Bordnetzes in Verbindung mit den vorhandenen Kapazitäten bilden einen Filter, so dass der positive Spannungspeak, der in den Figuren 3B und 4 veranschaulicht ist, ausgeglättet wird. Die Spannung UB erreicht zu einem Zeitpunkt 508 den dritten Schwellwert 3 und überschreitet diesen. Weil die Dauer der Überschreitung jedoch kürzer als der Zeitraum FH ist, wird der Phasenkurzschluss nicht aufgehoben. Während des gesamten Zeitraums D1 ist dies nicht der Fall, so dass anschließend eine entsprechende Überprüfung einer Überschreitung des ersten Schwellwerts 1 vorgenommen wird, wie an sich bekannt.

Nachdem der Phasenkurzschluss daraufhin zu einem Zeitpunkt 509 eingeleitet wurde, sinkt die Spannung UB ab und es wird, wie mit P veranschaulicht, abgewartet, ob die Spannung UB den vierten Schwellwert 4 unterschreitet. Die maximale Wartezeit hierfür ist mit D2 bezeichnet. Da die Spannung UA den vierten Schwellwert 4 in dieser Wartezeit D2 unterschreitet, wird der Zeitraum FL verkürzt, so dass auch hier keine negativen Effekte auftreten. Der Zeitpunkt 510 entspricht im Wesentlichen dem Zeitpunkt 506.

Um eine korrekte Erkennung des Falls B bei der korrekten Spannungsschwelle 1 zu gewährleisten, wird der Schwellwert 3 nur zeitlich begrenzt, nämlich für das Zeitfenster D1 nach dem Wechsel vom Zustand Phasenkurzschluss aktiv zu Phasenkurzschluss inaktiv ausgewertet. Dabei ist zu beachten, dass für den Fall B die Zeit D1 sorgfältig gewählt wird, um über alle Parametervariationen einerseits die Aktivierung der Kurzschlüsse bei der richtigen Spannungsschwelle 1 sicherzustellen und andererseits die Ausblendung der induktiven Spannungsspitzen durch ein ausreichend langes D1 zu gewährleisten.

Bei Systemen, in denen in Fall A eine sehr schnelle Entladung der lokalen Kapazitäten am Generator stattfindet, kann die Schwelle 4 genutzt werden, um eine schnelle Deaktivierung des Phasenkurzschlusses zur Vermeidung von Unterspannung und Reset zu erreichen, während gleichzeitig im Fall B die induktiven Spannungseinbrüche nach Aktivierung des Phasenkurzschlusses nicht zu einer Abschaltung des Phasenkurzschlusses führen. Das Vorgehen deckt sich hierbei mit dem Verhalten bei positiven Spannungsspitzen, es wird statt 2 nach dem Aktivieren des Phasenkurzschlusses für D2 eine weitere Spannungsschwelle 3 ausgewertet, um FL minimieren zu können.

## Patentansprüche

1. Verfahren zum Betreiben eines aktiven Brückengleichrichters (10), der über Phasenanschlüsse (U-Y) mit einer generatorisch betreibbaren elektrischen Maschine (20) in einem Bordnetz (200) eines Kraftfahrzeugs verbunden ist und Gleichspannungsanschlüsse (B+, B-) aufweist, wobei in einem generatorischen Betrieb der elektrischen Maschine (20) mittels des Brückengleichrichters (10) zu Einleitungszeitpunkten, zu welchen Einleitungsbedingungen vorliegen, zwischen den Phasenanschlüssen (U-Y) Phasenkurzschlüsse eingeleitet und jeweils erst zu Aufhebungszeitpunkten, zu welchen Aufhebungsbedingungen vorliegen, wieder aufgehoben werden, wobei zur Ermittlung der Einleitungs- und Aufhebungszeitpunkte eine Spannung (UA, UB) zwischen den Gleichspannungsanschlüssen (B+, B-) mit einem ersten Schwellwert (1) und einem zweiten Schwellwert (2) unterhalb des ersten Schwellwerts (1) verglichen wird, wobei die Spannung (UA, UB) zur Ermittlung der Einleitungszeitpunkte ferner mit einem dritten Schwellwert (3) oberhalb des ersten Schwellwerts (1) verglichen wird,
**dadurch gekennzeichnet, dass**
die Einleitung der Phasenkurzschlüsse jeweils früher vorgenommen wird, wenn festgestellt wird, dass die Spannung (UA) innerhalb eines vorgegebenen Zeitfensters (D1) nach dem Aufhebungszeitpunkt den dritten Schwellwert (3) mindestens für einen Mindestüberschreitungszeitraum (FH) überschritten hat.

2. Verfahren nach Anspruch 1, bei dem die Einleitung der Phasenkurzschlüsse jeweils sofort vorgenommen wird, sobald festgestellt wird, dass die Spannung (UA) innerhalb des vorgegebenen Zeitfensters (D1) nach dem Aufhebungszeitpunkt den dritten Schwellwert (3) mindestens für den Mindestüberschreitungszeitraum (FH) überschritten hat.

3. Verfahren nach Anspruch 1 oder 2, bei dem, wenn jeweils festgestellt wird, dass die Spannung (UA) innerhalb des vorgegebenen Zeitfensters (D1) nach dem Aufhebungszeitpunkt den dritten Schwellwert (3) nicht oder nicht mindestens für den Mindestüberschreitungszeitraum (FH) überschritten hat, die Phasenkurzschlüsse erst dann eingeleitet werden, wenn danach die Spannung (UA, UB) den ersten Schwellwert (1) für mehr als einen Mindestüberschreitungszeitraum (FH) überschritten hat.

4. Verfahren nach einem der vorstehenden Ansprüche, bei dem die Spannung (UA, UB) zur Ermittlung der Aufhebungszeitpunkte mit einem vierten Schwellwert (4) unterhalb des zweiten Schwellwerts (2) verglichen wird.

5. Verfahren nach einem der vorstehenden Ansprüche, bei dem ein Brückengleichrichter (10) mit ansteuerbaren Halbleiterstromventilen (12, 13) mit einer Durchbruchsspannung verwendet wird, wobei der dritte Schwellwert (3) unterhalb der Durchbruchsspannung liegt.

6. Verfahren nach einem der vorstehenden Ansprüche, bei dem der erste Schwellwert (1) und der zweite Schwellwert (2) oberhalb einer regulären Betriebsspannung des Bordnetzes (200) liegen.

7. Recheneinheit, die dazu eingerichtet ist, ein Verfahren nach einem der vorstehenden Ansprüche durchzuführen.

8. Computerprogramm, das eine Recheneinheit dazu veranlasst, ein Verfahren nach einem der Ansprüche 1 bis 6 durchzuführen, wenn es auf der Recheneinheit ausgeführt wird.

9. Maschinenlesbares Speichermedium mit einem darauf gespeicherten Computerprogramm nach Anspruch 8.

## Claims

1. Method for operating an active bridge rectifier (10) which is connected via phase terminals (U-Y) to a generatorically operable electrical machine (20) in an on-board electrical system (200) of a motor vehicle and has DC voltage terminals (B+, B-), with the electrical machine (20) being operated in generator mode by the bridge rectifier (10) at initiation times, at which initiation conditions are present, phase short circuits are initiated between the phase terminals (U-Y) and are cancelled again respectively at cancellation times at which cancellation conditions are present, wherein for determining the initiation and cancellation times a voltage (UA, UB) between the DC voltage terminals (B+, B-) is compared with a first threshold value (1) and a second threshold value (2) below the first threshold value (1), wherein the voltage (UA, UB) is further compared with a third threshold value (3) above the first threshold value (1) in order to determine the initiation times,
**characterized in that**
the phase short circuits are initiated earlier if it is determined that the voltage (UA) has exceeded the third threshold value (3) within a predetermined time window (D1) after the cancellation time at least for a minimum exceeding period (FH).

2. Method according to claim 1, in which the phase short circuits are initiated immediately as soon as it is determined that the voltage (UA) has exceeded the third threshold value (3) within the specified time window (D1) after the cancellation time at least for the minimum exceeding period (FH).

3. Method according to claim 1 or 2, in which, if it is determined in each case that the voltage (UA) has not exceeded the third threshold value (3) within the specified time window (D1) after the cancellation time, or has not exceeded the third threshold value (3) at least for the minimum exceeding period (FH), the phase short circuits are not initiated until the voltage (UA, UB) has exceeded the first threshold value (1) for more than one minimum exceeding period (FH).

4. Method according to any one of the preceding claims, in which the voltage (UA, UB) is compared with a fourth threshold value (4) below the second threshold value (2) in order to determine the cancellation times.

5. Method according to any one of the preceding claims, in which a bridge rectifier (10) with controllable semiconductor current valves (12, 13) with a breakdown voltage is used, wherein the third threshold value (3) is below the breakdown voltage.

6. Method according to any one of the preceding claims, in which the first threshold value (1) and the second threshold value (2) are above a regular operating voltage of the on-board electrical system (200).

7. Computing unit which is configured to perform a method according to any one of the preceding claims.

8. Computer program which causes a computing unit to perform a method according to any one of claims 1 to 6 when it is executed on the computing unit.

9. Machine-readable storage medium with a computer program stored on it according to claim 8.

## Revendications

1. Procédé pour faire fonctionner un redresseur en pont actif (10) qui est relié à une machine électrique (20) pouvant fonctionner comme un générateur par l'intermédiaire de bornes de phase (U-Y) dans un réseau de bord (200) d'un véhicule automobile et qui comporte des bornes de tension continue (B+, B-), dans lequel pendant un fonctionnement en mode générateur de la machine électrique (20) au moyen du redresseur en pont (10), des courts-circuits entre phases sont déclenchés entre les bornes de phase (U-Y) à des instants de déclenchement où il existe des conditions de déclenchement, et sont respectivement à nouveau supprimés à des instants de suppression où il existe des conditions de suppression, dans lequel une tension (UA, UB) entre les bornes de tension continue (B+, B-) est comparée à une première valeur de seuil (1) et à une deuxième valeur de seuil (2) inférieure à la première valeur de seuil (1) afin de déterminer les instants de déclenchement et de suppression, dans lequel la tension (UA, UB) est de plus comparée à une troisième valeur de seuil (3) supérieure à la première valeur de seuil (1) afin de déterminer les instants de déclenchement,
**caractérisé en ce que** le déclenchement des courts-circuits entre phases est respectivement effectuée plus tôt lorsqu'il est déterminé que la tension (UA) sur une fenêtre de temps prédéfinie (D1) après l'instant de suppression a franchi la troisième valeur de seuil (3) au moins pendant une durée de franchissement minimale (FH).

2. Procédé selon la revendication 1, dans lequel le déclenchement des courts-circuits entre phases est respectivement réalisée dès qu'il est déterminé que la tension (UA) sur la fenêtre de temps prédéfinie (D1) après l'instant de suppression a franchi la troisième valeur de seuil (3) au moins pendant la durée de franchissement minimale (FH).

3. Procédé selon la revendication 1 ou 2, dans lequel lorsqu'il est respectivement déterminé que la tension (UA) sur la fenêtre de temps prédéfinie (D1) après l'instant de suppression n'a pas franchi la troisième valeur de seuil (3) ou ne l'a pas franchi pendant au moins la durée de franchissement minimale (FH), les courts-circuits entre phases sont alors déclenchés lorsque la tension (UA, UB) a ensuite franchi la première valeur de seuil (1) pendant plus d'une durée de franchissement minimale (FH).

4. Procédé selon l'une des revendications précédentes, dans lequel la tension (UA, UB) est comparée à une quatrième valeur de seuil (4) inférieure à la deuxième valeur de seuil (2) afin de déterminer les instants de suppression.

5. Procédé selon l'une des revendications précédentes, dans lequel un redresseur en pont (10) avec des soupapes de régulation d'écoulement à semi-conducteur pouvant être commandées (12, 13) est utilisé avec une tension de claquage, dans lequel la troisième valeur de seuil (3) est inférieure à la tension de claquage.

6. Procédé selon l'une des revendications précédentes, dans lequel la première valeur de seuil (1) et la deuxième valeur de seuil (2) sont supérieures à une tension de fonctionnement normale du réseau de bord (200).

7. Unité de calcul conçue pour mettre en oeuvre un procédé selon l'une des revendications précédentes.

8. Programme informatique qui amène une unité de calcul à mettre en oeuvre un procédé selon l'une des revendications 1 à 6, lorsqu'il est exécuté sur l'unité de calcul.

9. Support de mémorisation lisible par machine sur lequel est enregistré un programme informatique selon la revendication 8.
